**Europäisches Patentamt**

**European Patent Office**

**Office européen des brevets**

(11) Veröffentlichungsnummer: **0 001 569**

**A1**

(12) **EUROPÄISCHE PATENTANMELDUNG**

(21) Anmeldenummer: **78101021.0**

(22) Anmeldetag: **28.09.78**

(51) Int. Cl.²: **F 01 K 23/00**
**F 02 C 1/04, F 23 C 1/06**

(30) Priorität: **29.09.77 DE 2743830**

(43) Veröffentlichungstag der Anmeldung:
**02.05.79 Patentblatt 79/9**

(84) Benannte Vertragsstaaten:
**BE FR GB LU NL**

(71) Anmelder: **Saarbergwerke Aktiengesellschaft**
**Trierer Strasse 1 Abt.: E-FF Postfach 1030**
**D-6600 Saarbrücken(DE)**

(72) Erfinder: **Jorzyk, Sigurd, Dipl.-Ing.**
**Kaiserslauterner Strasse 3**
**D-6600 Saarbrücken 3(DE)**

(72) Erfinder: **Meyer, Willy, Dipl.-Ing.**
**Finkenstrasse 3**
**D-6602 Dudweiler/Saar(DE)**

(72) Erfinder: **Spliethoff, Heinz, Dr.-Ing. Dipl.-Ing.**
**Warken-Eckstein-Strasse 3**
**D-6605 Friedrichsthal(DE)**

(54) **Verfahren und Anlage zur Erzeugung elektrischer Energie.**

(57) Bei einem Verfahren und einer Anlage zur Erzeugung elektrischer Energie durch Verbrennung fester Brennstoffe, Übertragung der Verbrennungswärme auf Arbeitsmittel und arbeitsleistende Entspannung der Arbeitsmittel wird ein Teil der Brennstoffe in einer Wirbelschicht und der Rest in einer Staubfeuerung verbrannt.

Dabei wird die in der Wirbelschichtfeuerung erzeugte Wärme auf das Arbeitsmittel eines Gasturbinenkreislaufs übertragen, während die in der Staubfeuerung gewonnene Wärme zur Erzeugung von Wasserdampf als Arbeitsmittel einer Dampfturbine verwendet wird. Die Abgase der Wirbelschichtfeuerung werden unmittelbar der Staubfeuerung zugeführt.

EP 0 001 569 A1

BEZEICHNUNG GEÄNDERT
siehe Titelseite

Verfahren zur Erzeugung elektrischer Energie

Die Erfindung betrifft ein Verfahren zur Erzeugung von elektrischer Energie durch Verbrennung fester Brennstoffe, Übertragung der Verbrennungswärme auf Arbeitsmittel und arbeitsleistende Entspannung der Arbeitsmittel sowie eine Anlage zur Durchführung des Verfahrens.

Bei herkömmlichen Dampfkraftwerken auf Kohlebasis erfolgt die Verbrennung der Kohle meist in sogenannten Staubfeuerungen bei hohen Temperaturen zwischen etwa 1000 und 1350°C. Gerade bei diesen hohen Temperaturen bilden sich jedoch in erheblichem Maße Schadstoffe, wie Schwefeloxide und insbesondere Stickoxide, welche aus Umweltschutzgründen nicht in die Atmosphäre abgelassen werden können. Zur Entfernung dieser Schadstoffe aus den Rauchgasen sind aufwendige Reinigungsanlagen erforderlich, welche die Investitions- und Betriebskosten eines Kraftwerkes erheblich erhöhen. Darüberhinaus setzt der Betrieb solcher Kraftwerke eine verhältnismäßig aufwendige Kohleaufbereitung voraus. Auch ist die Einsatzmöglichkeit unterschiedlicher Kohlearten begrenzt.

Der Erfindung liegt die Aufgabe zugrunde, ein Verfahren zur Erzeugung elektrischer Energie durch Verbrennung fester Brennstoffe zu entwickeln, welches bei verbessertem Wirkungsgrad geringere Schadstoffbildungen, eine weniger aufwendige Kohleaufbereitung sowie den Einsatz eines breiten Kohlebrennstoffbandes ermöglicht.

Diese Aufgabe wird erfindungsgemäß dadurch gelöst, daß
ein Teil des Brennstoffs in einer Wirbelschichtfeuerung
und der Rest in einer Staubfeuerung verbrannt wird, daß
die Abgase der Wirbelschichtfeuerung der Staubfeuerung
zugeführt werden, daß ein Teil der in der Wirbelschichtfeuerung gewonnen Wärme auf das verdichtete Arbeitsmittel
einer Gasturbine übertragen wird und daß die Restwärme
zusammen mit der Verbrennungswärme der Staubfeuerung zur
Erzeugung von hochgespanntem überhitzten Wasserdampf
herangezogen wird.

Die erfindungsgemäße Verknüpfung einer Wirbelschichtfeuerung mit einer Staubfeuerung im Kessel eines Kraftwerkes
und die Übertragung der in den einzelnen Feuerungszonen
anfallenden Wärmemengen auf verschiedene Arbeitsmittel,
nämlich Luft und Wasser, führt zu einer Reihe von Vorteilen:

Gemäß der Erfindung gelingt es, aus Kohle entbundene Wärme nunmehr auch in einer Gasturbine, die sich durch gesonders gute Wirkungsgrade auszeichnet, zu nutzen, wodurch sich der Gesamtwirkungsgrad des Kraftwerks gegenüber den herkömmlichen Kraftwerken erhöht.

Gegenüber reinen Wirbelschichtfeuerungen, die bereits aus
der chemischen Industrie, der Kohlevergasung (Winkler-
Verfahren) und der Müllverbrennung bekannt geworden sind
und bei denen ein wesentliches technisches Problem in der
Abgasbehandlung, insbesondere der Entstaubung der heißen
Abgase liegt, kommt als weiterer Vorteil hinzu, daß nunmehr ein erheblicher Teil der aus der Wirbelschichtfeuerung mitgerissenen unverbrannten Kohleteilchen in der Staubfeuerung verbrannt wird. Auch wird das in der Wirbelschichtfeuerung sich bildende Kohlenmonoxid in der Staubfeuerung zu unschädlichem Kohlendioxid verbrannt.

Darüberhinaus kühlen sich die heißen Abgase der Wirbelschichtfeuerung in der Staubfeuerungszone im Wärmetausch mit dem Dampferzeuger soweit ab, daß die Abtrennung der noch verbleibenden Feststoffpartikel keine Schwierigkeiten mehr bereitet. Sie kann in einfacher Weise zusammen mit der Entstaubung der Abgase der Staubfeuerung in den in der Kraftwerkstechnik seit langem eingeführten und technisch bewährten Elektrofiltern erfolgen.

Die Schadstoffbildung, insbesondere die Stickoxidbildung, im Zuge der Verbrennung der Kohle, wird durch die erfindungsgemäße Verfahrensweise erheblich gesenkt. Einmal ist in der Wirbelschichtfeuerung selbst auf Grund der dort vorherrschenden relativ niedrigen Verbrennungstemperatur die Stickoxidbildung von vorne herein niedrig. Zum anderen wird durch die Einleitung der heißen Rauchgase der Wirbelschichtfeuerung in die Staubfeuerung das Zündverhalten dieser Feuerung gestützt und stabilisiert, so daß auch im Staubfeuerungsbereich mit niedrigeren Temperaturen gefahren werden kann, wodurch die Stickoxidbildung auch in der Staubfeuerung erheblich abgesenkt wird. Bei Schwachlastfahrweise der Staubfeuerung sind zudem keine Stützfeuerungen mittels fremder Brennstoffe, wie Öl oder Brenngas, erforderlich. Auf Grund des guten Stoffaustauschs in der Wirbelschicht kann in der Wirbelschichtfeuerung bereits eine Vorentschwefelung erfolgen, wenn neben den Reaktionspartnern der Verbrennung noch schwefelbindende Stoffe, beispielsweise Kalk (CaO), in das Wirbelbett eingeleitet werden.

Ein nach dem erfindungsgemäßen Verfahren arbeitendes Kraftwerk zeichnet sich durch eine große Flexibilität bezüglich vorgegebener Lastschwankungen aus. So kann die Wirbelschichtfeuerung sowie der mit dieser verknüpfte Gas-Turbinenkreislauf zur Erzeugung einer konstanten Grundlast von beispielsweise 20 - 50 % des Gesamtleistungsvermögens des Kraftwerks verwendet werden, während die Staubfeuerung je nach dem gerade vorliegenden Lastbedarf teilweise oder vollständig zugeschaltet werden kann.

Als weiterer Vorteil des erfindungsgemäßen Verfahrens kommt hinzu, daß durch den Einsatz einer Wirbelschichtfeuerung die Verwendung eines praktisch unbegrenzten Kohle-Brennstoffbandes ermöglicht wird, wodurch der in verschiedenen Arten und Qualitäten anfallende Energierohstoff Kohle insgesamt besser genutzt werden kann.

Nach einem weiteren Merkmal der Erfindung besteht die Wirbelschichtfeuerung aus mehreren voneinander unabhängigen Wirbelschichtbetten, die bezüglich Brennstoff und Luftversorgung parallel geschaltet sind. Der Vorteil dieser Verfahrensweise, die eine vollständige Entkopplung der einzelnen Wirbelschichtbetten ermöglicht, ist einmal darin zu sehen, daß durch Zu- und Abschalten einzelner Wirbelschichtbetten auf einfache Weise eine stufenweise Leistungsänderung der Wirbelschichtfeuerung ermöglicht wird. Auch fällt bei Ausfall eines Wirbelbettes auf Grund irgendwelcher Störung nicht die gesamte Wirbelbettfeuerung aus. Dabei kann im Bereich der Heißluftgasturbine eine Wirbelschichtleistungsänderung durch Änderung des Brenngaszusatzes zur Brennkammer der Heißluftturbine kompensiert werden.

Durch die enge Verknüpfung mit der Staubfeuerung wirken sich auch Änderungen in der Wärmekopplung zwischen Wirbel-

bettfeuerung und Staubfeuerung, z.B. bedingt durch Änderung der Wirbelschichtabgasmenge, Änderung der Gasturbinenabgasteilströme bzw. deren Sauerstoffgehalt zur Staubfeuerung und auch Wirbelschichtfeuerung auf das Gesamtsystem nicht negativ aus, da diese durch die Staubfeuerung kompensiert werden können.

Eine Anlage zur Durchführung des erfindungsgemäßen Verfahrens ist gekennzeichnet durch einen integrierten Feuerraum mit zwei miteinander kommunizierenden Feuerungszonen, von denen die untere als Wirbelschichtfeuerung und die obere als Staubfeuerung ausgebildet ist, durch mindestens einen im Wirbelbett eingetauchten Wärmetauscher, dessen Eingang mit einem Luftkompressor und dessen Ausgang mit einer Heißluftturbine in Verbindung steht, sowie durch einen in der Staubfeuerung angeordneten Wärmetauscher, dessen Eingang mit einer Speisewasserhochdruckpumpe und dessen Ausgang mit einer Dampfturbine in Verbindung steht.

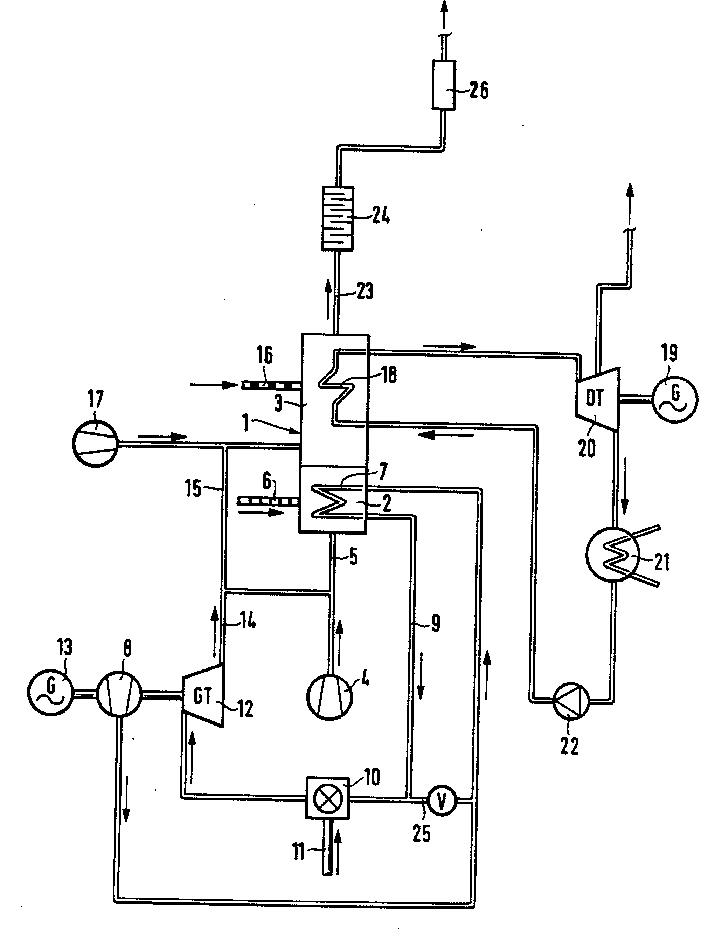

Weitere Erläuterungen zu der Erfindung sind dem in der Figur schematisch dargestellten Ausführungsbeispiel zu entnehmen. Die Figur zeigt ein kombiniertes Gas-Dampfturbinenkraftwerk mit einem integrierten Feuerraum (1), in dem die eingesetzte Kohle verfeuert wird. Erfindungsgemäß erfolgt die Verfeuerung in zwei getrennten Zonen und zwar in einer im unteren Bereich 2 des Feuerraums 1 vorgesehenen Wirbelschichtfeuerung und in einer im oberen Bereich 3 vorgesehenen Staubfeuerung. Sauerstoffhaltiges Gas für die Aufrechterhaltung der Wirbelschichtfeuerung wird über eine Leitung 5 zugeführt, während die benötigte Kohle über einen Weg 6 in die Wirbelschichtfeuerung gefördert wird. Die Leitung 5 ist im Normalbetrieb über die Leitung 14 an den Ausgang der Heißluftgasturbine 12 angeschlossen; sie kann jedoch in Sonderfällen auch über ein Gebläse 4 mit Frischluft versorgt werden.

Ein im Wirbelbett unter einem Temperaturniveau von etwa 800 - 850$^o$C erzeugter Wärmeteilstrom wird mittels eines unmittelbar in das Wirbelbett eingetauchten Wärmetauschers 7 auf die Arbeitsluft einer Gasturbine übertragen. Im einzelnen wird die Arbeitsluft dabei mittels eines Kompressors 8 angesaugt und auf einen Druck von etwa 6 bis 12 bar verdichtet, im Wärmetauscher 7 auf etwa 500 - 750$^o$C aufgeheizt und dann über eine Leitung 9 zunächst einer Brennkammer 10 zugeführt. Innerhalb der Brennkammer erfolgt durch Verbrennung eines Brenngases, beispielsweise Erdgas, also im wesentlichen Methan, Kokereigas oder auch Kohlevergasungsgas, welches der Brennkammer über eine Leitung 11 zugeführt wird, eine weitere Aufheizung der Luft. Das in der Brennkammer bei einer Temperatur zwischen etwa 800 und 850$^o$C anfallende Gasgemisch aus Luft und Verbrennungsabgas wird nunmehr einer Gasturbine 12 zugeführt und in dieser arbeitsleistend entspannt. Ein Teil der gewonnenen Arbeit wird unmittelbar zum Antrieb des Kompressors 8 verwendet, während der Rest in einem Generator 13 in elektrische Energie umgewandelt wird. Das Abgas der Gasturbine 12, welches noch eine Temperatur von etwa 350 bis 450$^o$C aufweist und dessen Sauerstoffgehalt noch zwischen 18 und 21 % liegt, wird über eine Leitung 14 erneut als sauerstoffhaltiges Gas der Wirbelschichtfeuerung 2 zugeführt. Ein Teil dieses Abgases kann aber auch über eine Leitung 15 der Staubfeuerung 3 zugeführt werden. Über eine Bypassleitung 25, die mit einem Regelstellglied versehen zwischen dem Ausgang des Kompressors 8 und dem Eingang der Brennkammer 10 angeordnet ist, kann die Luftmenge durch den Wärmetauscher 7 und somit deren Aufheizung in der Wirbelschichtfeuerung gesteuert werden. Die erfindungsgemäße Konzeption des Gasturbinenkreislaufes in Verbindung mit einer Wirbelschichtfeuerung, die zusätzliche Aufheizung der Arbeitsluft durch direkte Verbrennung eines Brenngases im Kreislauf sowie die Rückführung der Abgase der Heißluftgasturbine in den Feuerraum ergibt eine
Reihe von Vorteilen:

Der hohe Wärmeübergang einer Wirbelschicht auf in die Wirbelschicht eingetauchte Wärmeaustauscherrohre ermöglicht eine
maximale Übertragung von Wärme aus der Wirbelschicht auf die
Arbeitsluft der Heißluftgasturbine. Darüberhinaus wird durch
die weitere Aufheizung der Arbeitsluft in der Brennkammer und
die Vergrößerung des Massenflusses durch zusätzliche Verbrennungsgase die Leistung der Gasturbine weiter erhöht. Auch gelingt es, die Abwärme der Gasturbine direkt in das System zurückzuführen, d.h., es sind keine zusätzlichen Wärmetauscher
und Wärmeübertragungskreisläufe, welche immer zu Wärmeverlusten führen, erforderlich. Die erfindungsgemäße Wärmerückkoppelung zwischen Heißluftgasturbine und Wirbelschicht führt
daher zu einer Verbesserung des Wirkungsgrades des Kraftwerks
und somit zu einer Verringerung des Brennstoffverbrauches.
Durch die Einleitung der $O_2$-haltigen Abgase der Heißluftgasturbine in den Feuerraum ist darüberhinaus stets eine vollständige Sauerstoffnutzung der mit dem Kompressor 8 zugeführten Luft gewährleiste. Dies gilt auch bei veränderlichem
$O_2$-Verbrauch in der Brennkammer 10 und der Wirbelschichtfeuerung 2.
Die in der Wirbelschichtfeuerung 2 anfallenden Abgase mit
einem erheblichen Anteil an mitgerissenen Feststoffteilchen,
der sich normalerweise als sehr störend erweist, werden erfindungsgemäß unmittelbar der Staubfeuerung 3 zugeführt und
dort zusammen mit den Reaktionspartnern der Staubfeuerung,
nämlich feingemahlener Kohle, welche über einen Weg 16 und
sauerstoffhaltiges Gas, welches über die Leitungen 14 und 15
bzw. in Sonderfällen über ein Gebläse 17 und die Leitung 15
zugeführt wird, weiterbehandelt. Die in der Staubfeuerung erzeugte Wärme sowie ein Teil des Wärmeinhalts der Abgase der Wirbelschichtfeuerung werden zur Erzeugung von hochgespanntem überhitztem Dampf auf einen in der Staubfeuerung angeordneten Wärmetauscher 18 übertragen. Der Dampf wird in einer mit einem Generator 19 gekoppelten Dampfturbine 20 entspannt, in einem Kondensator 21 kondensiert und dann mittels einer Hochdruckpumpe 22 erneut dem Dampferzeuger 18 zugeführt.

Die Abgase der Staubfeuerung einschließlich der Abgase der Wirbelschichtfeuerung werden mit einer Temperatur von etwa 160 - 180°C über eine Leitung 23 aus dem Feuerraum 1 abgezogen, in einem Elektrofilter 24 weitgehend entstaubt und schließlich in einer Reinigungsanlage 26 von Schadstoffen, insbesondere von Schwefel- und Stickoxiden, befreit.

Durch die erfindungsgemäße Kombination einer Wirbelschichtfeuerung mit einer Staubfeuerung gelingt es, die Schadstoffbildung, insbesondere die Bildung von Stickoxiden, bei der Verbrennung der Einsatzkohle erheblich zu senken. Auf Grund der relativ niedrigen Verbrennungstemperaturen in der Wirbelschicht ist die Stickoxidbildung in dieser Feuerungszone von vorneherein gering. Darüberhinaus führt die Einleitung der heißen Abgase der Wirbelschichtfeuerung in die Staubfeuerungszone zu Zünd- und Stützhilfen für eine sichere Staubverbrennung und ermöglicht somit auch für die Staubfeuerung niedrigere Verbrennungstemperaturen und damit eine umweltfreundlichere Verbrennung der eingesetzten Kohle.

Patentansprüche

1. Verfahren zur Erzeugung von elektrischer Energie durch
   Verbrennung fester Brennstoffe, Übertragung der Verbrennungswärme auf Arbeitsmittel und arbeitsleistende
   Entspannung der Arbeitsmittel, dadurch gekennzeichnet,
   daß ein Teil des Brennstoffs in einer Wirbelschichtfeuerung und der Rest in einer Staubfeuerung verbrannt wird,
   daß die Abgase der Wirbelschichtfeuerung der Staubfeuerung zugeführt werden, daß ein Teil der in der Wirbelschichtfeuerung gewonnenen Wärme auf das verdichtete Arbeitsmittel einer Gasturbine übertragen wird und daß die
   Restwärme zusammen mit der Verbrennungswärme der Staubfeuerung zur Erzeugung von hochgespanntem überhitztem
   Wasserdampf herangezogen wird.

2. Verfahren nach Anspruch 1, dadurch gekennzeichnet, daß
   als Arbeitsmittel der Gasturbine Luft verwendet wird.

3. Verfahren nach einer der Ansprüche 1 oder 2, dadurch gekennzeichnet, daß das in der Wirbelschichtfeuerung erhitzte Arbeitsmittel der Gasturbine vor seiner arbeitsleistenden Entspannung durch Verbrennung eines weiteren
   Brennstoffs im Arbeitsmittel weiter erhitzt wird.

4. Verfahren nach einer der Ansprüche 1 bis 3, dadurch gekennzeichnet, daß mindest ein Teil der Abgase der Gasturbine unmittelbar der Wirbelschichtfeuerung und der
   Rest der Staubfeuerung zugeführt wird.

BAD ORIGINAL

Saarbergwerke AG

0001569

- 2 -

5. Verfahren nach einem der Ansprüche 1 bis 4, dadurch gekennzeichnet, daß der Wirbelschichtfeuerung schwefelbindende Stoffe zugeführt werden.

6. Verfahren nach einem der Ansprüche 1 bis 5, dadurch gekennzeichnet, daß die Wirbelschichtfeuerung aus mehreren voneinander unabhängigen Wirbelschichtbetten besteht.

7. Anlage zur Durchführung des Verfahrens nach Anspruch 1, gekennzeichnet durch einen integrierten Feuerraum (1) mit zwei miteinander kommunizierenden Feuerungszonen (2, 3), von denen die eine (2) als Wirbelschichtfeuerung und die andere (3) als Staubfeuerung ausgebildet ist, durch mindestens einen im Wirbelbett eingetauchten Wärmetauscher (7), dessen Eingang mit einem Luftkompressor (8) und dessen Ausgang mit einer Heißluftturbine (12) in Verbindung steht, sowie durch einen in der Staubfeuerung angeordneten Wärmetauscher (18), dessen Eingang mit einer Speisewasserhochdruckpumpe (22) und dessen Ausgang mit einer Dampfturbine (20) in Verbindung steht.

8. Anlage nach Anspruch 7, dadurch gekennzeichnet, daß in die Verbindungsleitung zwischen dem Ausgang des Wärmetauschers (7) im Wirbelbett und der Heißluftgasturbine (12) eine Brennkammer (10) eingebunden ist.

9. Anlage nach den Ansprüchen 7 oder 8, gekennzeichnet durch eine regelbare Bypassleitung (25) zwischen dem Ausgang des Luftkompressors (8) und dem Eingang der Brennkammer (10).

# EUROPÄISCHER RECHERCHENBERICHT

**Europäisches Patentamt**

Nummer der Anmeldung

EP 78 101 021.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| – | <u>CH - A - 226 747</u> (MASCHINENFABRIK OERLIKON) <br> *Seite 1, Zeilen 29-34, <br> Seite 2, Zeilen 12-14, <br> Seite 2, Zeilen 44 ff.* | 1,2,4 |
| – | <u>DE - A - 2 446 049</u> (FOSTER WHEELER) <br> *Anspruch 7; <br> Seite 1, Absatz 2 ff., Ziffer 22, <br> Seite 6, Absatz 2, Ziffer 24, <br> Seite 4, Absatz 3 ff.* | 1,5-7 |
| , – | BROWN BOVERI MITTEILUNGEN <br> Band 62, Heft 7/8, 1975 <br> "Kombikraftwerke für Spitzenlast" <br> Seiten 293-296 <br> *Seite 294; Fig. 17, Buchstabe B* | 3 |

**KLASSIFIKATION DER ANMELDUNG (Int.Cl.²)**

F 01K 23/00
F 02C 1/04
F 23C 1/06

**RECHERCHIERTE SACHGEBIETE (Int. Cl.²)**

F 02C 1/04
F 02C 7/02
F 01K 23/00
F 01K 23/02
F 23D 7/00
F 23C 1/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 26-01-1979 | STÖCKLE |

EPA form 1503.1 06.78